# EUROPEAN PATENT SPECIFICATION

(11) **EP 3 869 474 B1**
(45) Date of publication and mention of the grant of the patent: **12.02.2025**
(21) Application number: 18937245.1
(22) Date of filing: 04.12.2018
(51) Int. Cl.: G07F 17/12, G07F 9/02, G07F 11/46, G06Q 20/18, G06Q 20/20, G07G 1/00

(54) **ORGANIZATION METHOD AND DEVICE FOR DELIVERY LOCKER, DELIVERY LOCKER, AND STORAGE MEDIUM**
ORGANISATIONSVERFAHREN UND VORRICHTUNG FÜR LIEFERSCHRANK, LIEFERSCHRANK UND SPEICHERMEDIUM
PROCÉDÉ ET DISPOSITIF D'ORGANISATION DE CASIER DE LIVRAISON, CASIER DE LIVRAISON, ET SUPPORT DE STOCKAGE

(30) Priority: 16.10.2018 CN 201811202380
(43) Date of publication of application: 25.08.2021
(73) Proprietor: HIVE BOX NETWORK TECHNOLOGY LIMITED, Shenzhen 518000 (CN)
(72) Inventor: LEI, Honggang, Shenzhen, Guangdong 518000 (CN)
(74) Representative: Cabinet Beaumont
(86) International application number: PCT/CN2018/119093
(87) International publication number: WO 2020/077760

(56) References cited:
- EP-A1- 1 273 531
- EP-A1- 2 255 774
- CN-A- 107 159 579
- CN-A- 107 527 107
- CN-A- 107 961 980
- CN-A- 107 961 980
- CN-A- 108 074 356
- CN-A- 108 074 356
- CN-U- 204 416 544
- US-A1- 2017 073 159
- US-A1- 2018 236 495
- US-B1- 9 745 130

## Description

### TECHNICAL FIELD

Embodiments of the present application relate to the field of delivery lockers, for example, an organization method and apparatus for a delivery locker, a delivery locker and a storage medium.

### BACKGROUND

In recent years, with the rapid development of e-commerce, express delivery, which is closely related to e-commerce, shows a high-speed growth trend. However, the "last mile" delivery problem at the end of express delivery becomes a bottleneck in the development of express delivery. An intelligent delivery locker emerges in this environment.

The intelligent delivery locker temporarily stores a package into the storage space of the delivery locker according to the package size, delivery information is sent to a user in a form of a short message or the like, and the user is provided with a 24-hour automatic service for collecting the package. Such a service mode better satisfies the user requirement of collecting the package at any time, improves the user satisfaction, and thus promotes the further development of e-commerce.

The inventor finds that the related intelligent delivery locker has the following defects: after the intelligent delivery locker operates for a period of time, multiple accidents or accumulated errors emerge. For example, a delivery locker system records a wrong number of pallets, or the actual storage position of the package is inconsistent with a storage position recorded by the delivery locker, the height of the storage space actually occupied by the package is inconsistent with the height of storage space recorded by the delivery locker. These lead to multiple problems such as collecting a wrong package by the user, storage space waste in the delivery locker, and device faults, thereby reducing the user experience.

US9745130B1 discloses a method for pickup locations with modifiable storage compartment configurations based on sizes of items to be delivered to the pickup locations. Partitions may be positioned utilizing positioning elements for configuring the sizes of each of the storage compartments. Door operations for each of the storage compartments may be modified so as to correspond to the current sizes of the storage compartments, and in some instances multiple doors may be utilized for providing access to larger storage compartments while individual door may be utilized for providing access to smaller storage compartments.

EP1273531A1 discloses a storage system for receiving, delivering and storing items to be distributed. Items are stored in a flexible manner allowing sufficient space to be allocated to each item while ensuring that the total available space is utilised in an optimal manner.

US2017/073159A1 discloses a parcel terminal that includes a shelving unit comprising a plurality of shelves that are separated by respective predetermined distances along a dimension of the unit. The parcel terminal includes a receptacle for receiving a parcel from a user, a loader configured to transfer the parcel from the receptacle to a shelf on the shelving unit, and an electronic controller in electronic communication with the loader. The electronic controller is configured to determine a number of open shelves required to accommodate the parcel based on a size of the parcel and on the respective predetermined distances, to select a set of shelves having at least the required number of open shelves, and to initiate movement of the loader so as to place the parcel within the selected set of shelves.

### SUMMARY

Embodiments of the present application provide an organization method and apparatus for a delivery locker, a delivery locker and a storage medium to optimize device performance of a delivery locker.

The invention is set out in the appended set of claims.

### BRIEF DESCRIPTION OF DRAWINGS

FIG. 1 is a flowchart of an organization method for a delivery locker according to embodiment one of the present application.
FIG. 2A is a flowchart of an organization method for a delivery locker according to embodiment two of the present application.
FIG. 2B is a schematic diagram of an internal structure of a delivery locker according to embodiment two of the present application.
FIG. 2C is a schematic diagram of an internal structure of a delivery locker according to embodiment two of the present application.
FIG. 3 is a schematic diagram of an organization apparatus for a delivery locker according to embodiment three of the present application.
FIG. 4 is a structural diagram of a delivery locker according to embodiment four of the present application.

### DETAILED DESCRIPTION

The present application is further described in detail hereinafter in combination with the drawings and embodiments. It is to be understood that the embodiments described herein are intended to illustrate the present application and not to limit the present application. Additionally, it is to be noted that for ease of description, only part, not all, of the content related to the present application is illustrated in the drawings. Before the exemplary embodiments are discussed in more detail, it is to be noted that some of the exemplary embodiments are described as processing or methods illustrated in flowcharts. Although the operations (or steps) are illustrated to be sequentially processed in the flowcharts, many of the operations may be implemented concurrently, coincidently or simultaneously. Additionally, the sequence of multiple operations may be rearranged. The processing may be terminated when the operations are completed, but the processing may further have additional steps which are not included in the drawings. The processing may correspond to a method, a function, a procedure, a subroutine, a subprogram or the like.

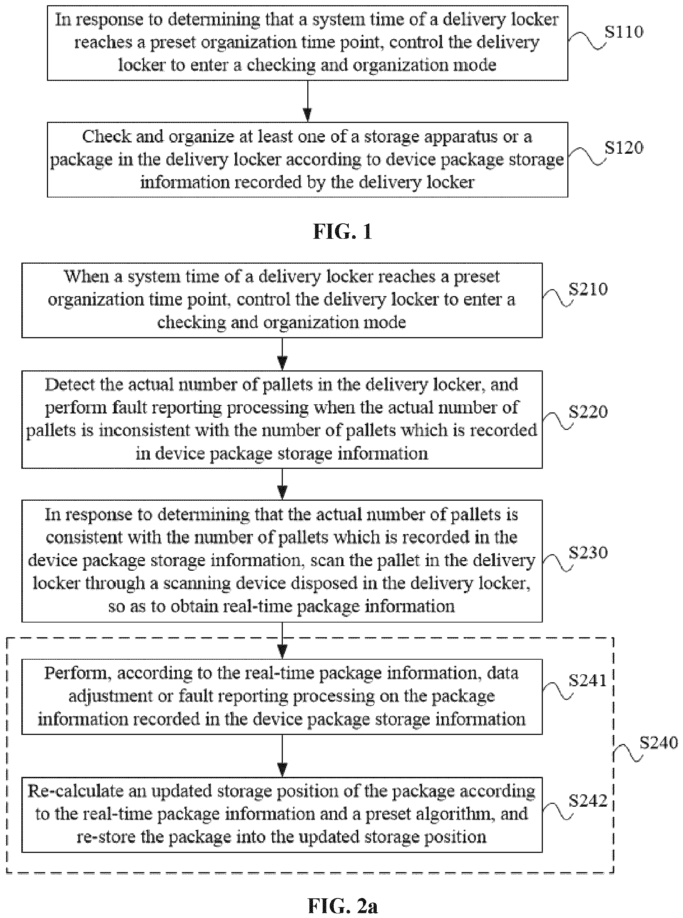

FIG. 1 is a flowchart of an organization method for a delivery locker according to the present application. This embodiment is applicable to the case of automatically organizing a delivery locker. The method may be executed by an organization apparatus for a delivery locker. The apparatus may be implemented by at least one of software or hardware and may generally be integrated in the delivery locker. As shown in FIG. 1, the method includes step S110.

In step S110, in response to determining that a system time of a delivery locker reaches a preset organization time point, the delivery locker is controlled to enter a checking and organization mode.

The preset organization time point may be a time point designated by a delivery locker system or artificially and used for organizing the delivery locker. The preset organization time point may be set according to actual requirements, such as 1:00 a.m. Specific time of the preset organization time point is not limited in the embodiments of the present application. The checking and organization mode may be an operation mode for organizing the delivery locker.

In the present application, if the delivery locker detects that the system time of the delivery locker reaches the preset organization time point, the delivery locker is controlled to enter the checking and organization mode and performs organization. In this case, the delivery locker in the checking and organization mode needs to suspend user operation functions of the delivery locker, such as package collection, package storage, package sending and temporary storage, so as to avoid system faults of the delivery locker.

In an embodiment of the present application, the preset organization time point is a target idle time point calculated by the delivery locker according to recorded data.

The target idle time point may be the best time point designated for the delivery locker to enter the checking and organization mode. There are basically no user operations within a range of the time point.

In this embodiment of the present application, the delivery locker may perform organization and analysis according to big data recorded by the system, so as to obtain the best idle time point of the delivery locker as the preset organization time point. The configuration such that the delivery locker calculates the preset organization time point through big data analysis without manual participation can make more reasonable use of idle time of the delivery locker. In step S120, at least one of a storage apparatus or a package in the delivery locker is checked and organized according to device package storage information recorded by the delivery locker.

The device package storage information may be information of a related device, apparatus and stored package, such as the number of pallets, the number of packages, storage positions and storage heights of multiple packages in the delivery locker. The storage apparatus may be a related apparatus for storing the package in the delivery locker, such as a storage shelf for storing the package, and a pallet in the storage shelf.

In the present application, in the organization of the delivery locker, at least one of the related storage apparatus or the stored package in the delivery locker may be checked and organized according to the device package storage information recorded in the delivery locker, so as to automatically detect whether there is wrong information related to the device, apparatus, stored package and the like in the delivery locker.

According to the application, when a system time of a delivery locker reaches a preset organization time point, the delivery locker is controlled to enter a checking and organization mode; and at least one of a storage apparatus or a package in the delivery locker is checked and organized according to device package storage information recorded by the delivery locker. This improves the phenomena of collecting a wrong package by a user, storage space waste, device faults and the like, thereby preventing the user from collecting a wrong package, maximizing the use of the storage space in the delivery locker, and reducing system faults of the delivery locker.

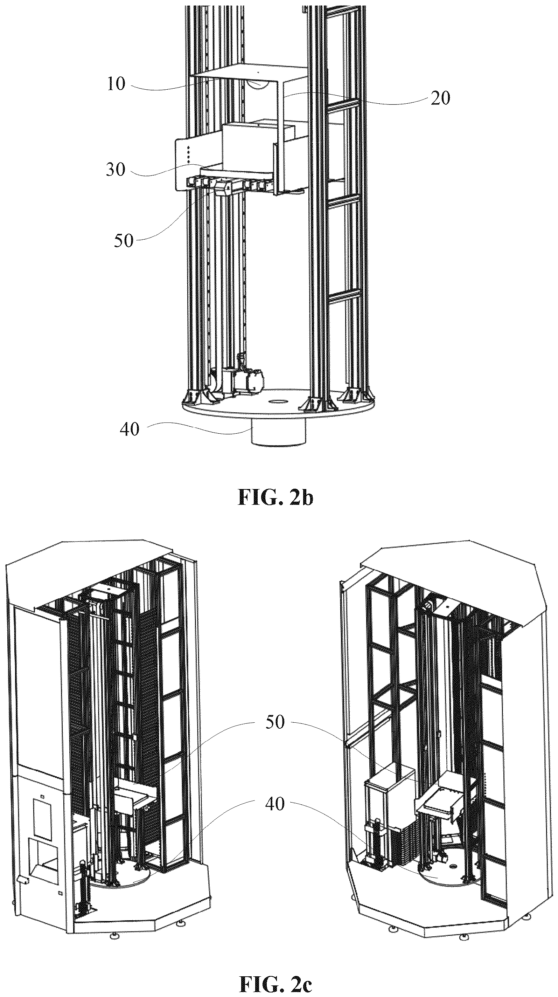

FIG. 2A is a flowchart of an organization method for a delivery locker according to further aspects of the present application. FIG. 2B is a schematic diagram of an internal structure of a delivery locker according to the present application. FIG 2C is a schematic diagram of an internal structure of a delivery locker according to the present application. A specific implementation mode of checking and organizing at least one of a storage apparatus or a package in the delivery locker according to device package storage information recorded in a delivery locker is given. As shown in FIG. 2A, the method in this embodiment may include steps S210 to S240.

In step S210, when a system time of a delivery locker reaches a preset organization time point, the delivery locker is controlled to enter a checking and organization mode.

In step S220, the actual number of pallets in the delivery locker is detected, and fault reporting processing is performed when the actual number of pallets is inconsistent with the number of pallets which is recorded in the device package storage information.

In the present application, the storage apparatus comprises a pallet. In the checking and organization of the storage apparatus in the delivery locker, it may be firstly detected whether pallet information in the delivery locker is wrong. The delivery locker may detect the actual number of pallets, and if it is determined that the actual number of pallets is inconsistent with the number of pallets which is recorded in the device package storage information, the fault reporting processing is performed automatically to give a notification to related staff, so that related staff artificially detect and maintain the delivery locker.

In an embodiment, when the pallet in the delivery locker has a fault, such as the pallet is missing, the delivery locker cannot solve this autonomously. Moreover, the normal operation of the delivery locker is seriously affected once the pallet has a fault, causing errors in package storage and other problems. Thus, it is necessary to perform guarantee processing and perform checking, detection and maintenance by the staff.

In step S230, in response to determining that the actual number of pallets is consistent with the number of pallets which is recorded in the device package storage information, the pallet in the delivery locker is scanned by a scanning device disposed in the delivery locker, so as to obtain real-time package information.

The real-time package information includes length information, width information and height information of the package. The real-time package information is the actual package storage information obtained by the scanning device. The scanning device may be a scanning camera, or another apparatus or device that can scan the package to obtain volume information of the package, which is not limited in the present application. As shown in FIG 2B, the scanning device 10 may be installed in multiple positions of the delivery locker, such as on a telescopic scanning device bracket 20, on a locker top, or on a port for package storage and collection, as long as the function of volume scanning can be implemented, which is not limited in the present application.

As shown in FIG. 2B, in the present application, when the delivery locker determines that the pallet does not have a fault or a fault is removed, the stored package may be continuously checked and organized according to package storage information. In the checking and organization of the stored package by the delivery locker, the scanning device may be used to scan pallets 30 in the delivery locker sequentially according to a set order (for example, from top to bottom and from left to right), so as to obtain real-time package information corresponding to a package in each pallet 30. In an embodiment, the delivery locker may pull out, through a built-in rotating and lifting mechanism 40, a telescopic car structure 50 and other components (as shown in FIGS. 2B and 2C), each pallet on a storage shelf recorded by a delivery locker system, and volume scanning is performed to the pallet and the package on the pallet through the scanning camera, so as to obtain length information, width information and height information of the package, and use the length information, the width information and the height information as the real-time package information.

In step S240, the real-time package information is checked with package information recorded in the device package storage information, and the package information recorded in the device package storage information is organized according to a checking result.

In an embodiment, after the delivery locker obtains the real-time package information corresponding to the package through the scanning device, the real-time package information may be checked with the height of the storage shelf occupied by the package which is matched and recorded by the delivery locker system. Generally, the storage shelf being able to accommodate the package indicates that the length and the width of the storage shelf can satisfy the storage requirements of the length and the width of the package. Therefore, the checking and organization of the height information of the package may be focused on.

In an embodiment, step S240 may include steps S241 and S242 described below.

In step S241, data adjustment or fault reporting processing is performed, according to the real-time package information, on the package information recorded in the device package storage information.

In an embodiment, when the delivery locker finds an abnormality in the checking of the package information, system data recorded by the delivery locker may be adjusted and modified correspondingly, or the fault reporting processing may be performed.

Table 1 is a package information table recorded by a delivery locker system according to the present application. Table 2 is an actual package storage information table of the delivery locker according to the present application. In a specific example, as shown in Tables 1 and 2, information recorded in Table 1 is package storage information recorded by the delivery locker system, and information recorded in Table 2 is actual storage information of the delivery locker. As shown in Table 1, the package storage information recorded by the delivery locker system is as follows: package 01 is stored on storage shelf A77 and occupies the space height of 3 storage shelves, and package 02 is stored on storage shelf A76 and occupies the space height of 1 shelf. As shown in Table 2, the actual package storage situation is as follows: package 01 is stored on storage shelf A78 and occupies the space height of 3 storage shelves, and package 02 is stored on storage shelf A77 and occupies the space height of 1 shelf. In this case, if a collection instruction for package 01 which is input by a user is received, the delivery locker collects a package on a pallet in position A77 according to the package storage information recorded by the system, and package 02 is collected, thus collecting a wrong package; if a collection instruction for package 02 which is input by the user is received, the delivery locker collects a package on a pallet in position A76 according to the package storage information recorded by the system, but there is no pallets in position A76, thus collecting no packages. Before the user collects the package, if in the checking and organization process, the delivery locker detects that the real-time package information is inconsistent with the package storage information recorded by the delivery locker system, such as the package storage position is wrong as described above, then the storage information recorded by the delivery locker system may be modified according to the real-time package information, thus avoiding the problem of collecting a wrong package or collecting no packages.

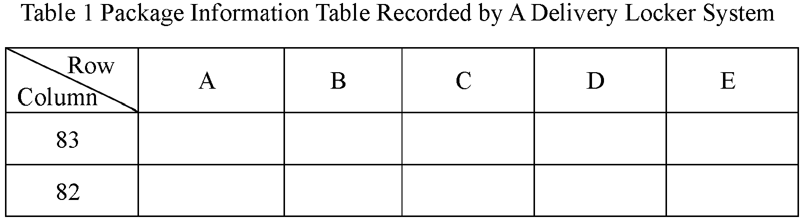

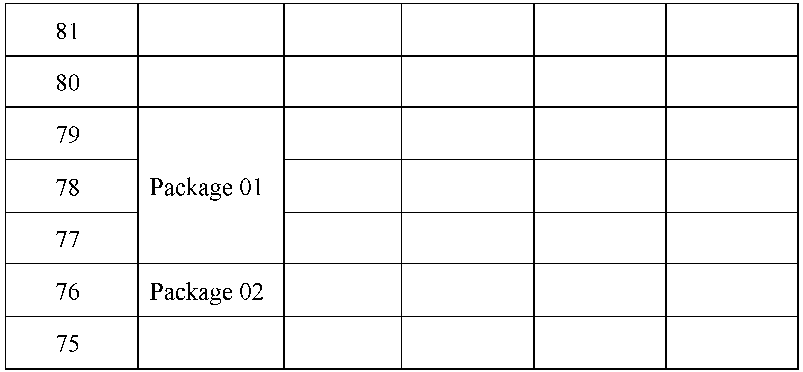

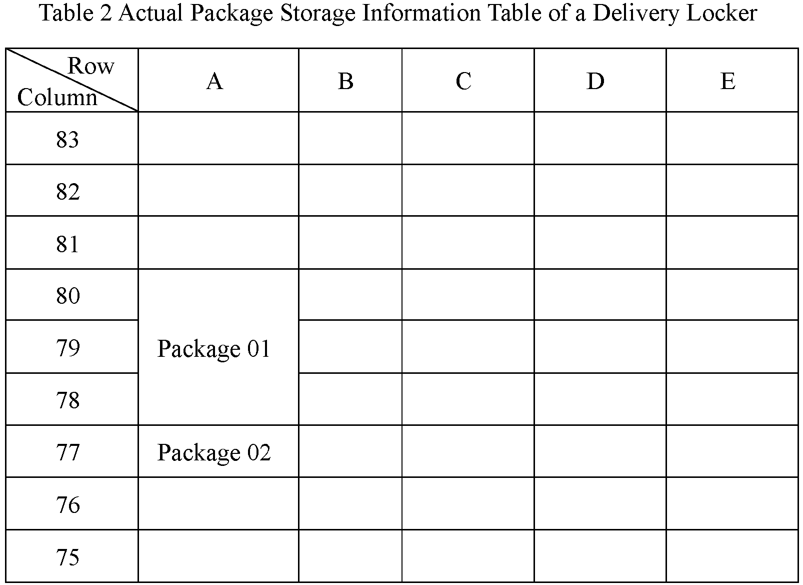

Table 3 is a package information table recorded by a delivery locker system according to the present application. Table 4 is an actual package storage information table of the delivery locker according to the present application. In another specific example, as shown in Tables 3 and 4, information recorded in Table 3 is package storage information recorded by the delivery locker system, and information recorded in Table 4 is actual package storage information of the delivery locker. As shown in Table 3, the package storage information recorded by the delivery locker system is as follows: package 01 is stored on storage shelf A77 and occupies the space height of 2 shelves. As shown in Table 4, the actual storage situation of the delivery locker is as follows: package 01 is stored on storage shelf A77 and occupies the space height of 3 shelves. In this case, if a storage instruction for package 02 which is input by a user is received, package 02 is automatically stored on storage shelf A79 through the calculation of the delivery locker system. Since the space of shelf A79 has actually been occupied by package 01, the stored package 02 interferes with package 01 in this case, thus resulting in device faults. Before the user collects the package, if in the checking and organization process, the delivery locker detects that the real-time package information is inconsistent with the package storage information recorded by the delivery locker system, such as the package storage space is wrong as described above, then the package storage information recorded by the delivery locker system may be modified according to the real-time package information, thus avoiding the problem of device faults. The actual situation of the internal storage in the delivery locker is checked to find problems, adjust the recorded data or report faults in time, and handle the problems in time, thereby avoiding more serious faults and reducing the fault rate of a device system.

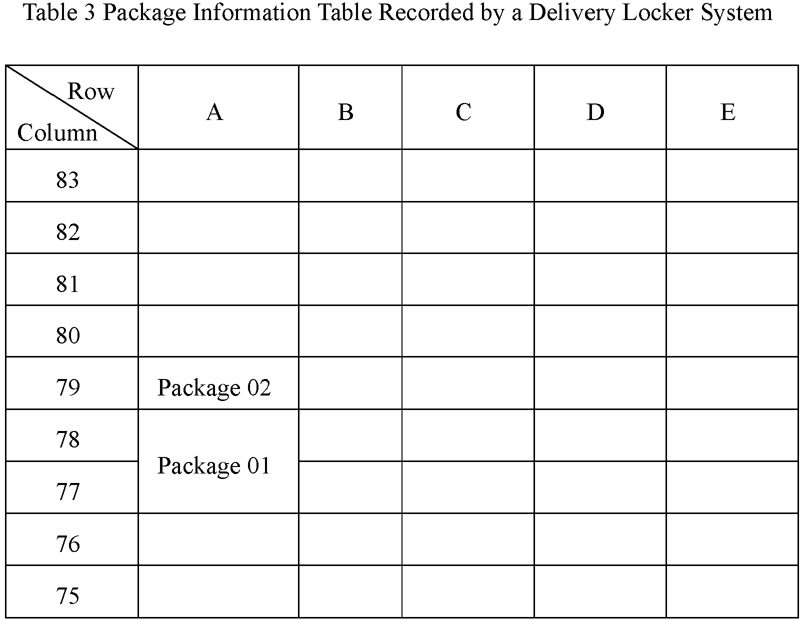

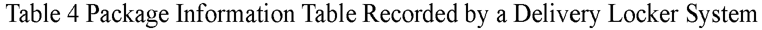

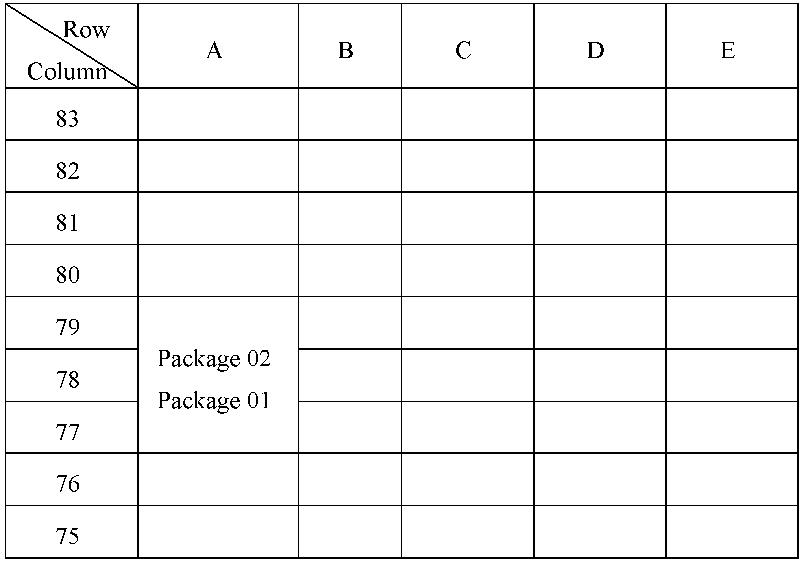

Table 5 is a package information table recorded by a delivery locker system according to the present application. Table 6 is an actual package storage information table of the delivery locker according to the present application. In another specific example, as shown in Tables 5 and 6, information recorded in Table 5 is package storage information recorded by the delivery locker system, and information recorded in Table 6 is actual package storage information of the delivery locker. As shown in Table 5, the package storage information recorded by the delivery locker system is as follows: package 01 is stored on storage shelf A77 and occupies the space height of 3 shelves. As shown in Table 6, the actual storage situation of the delivery locker is as follows: package 01 is stored on storage shelf A77 and occupies the space height of 2 shelves. In this case, if an instruction for storing package 02 which is input by a user is received, package 02 is automatically stored on storage shelf A80 through the calculation of the delivery locker system. The system records that package 01 is stored on storage shelf A77 and occupies the space height of 3 shelves, but package 01 actually occupies the space height of 2 shelves, resulting in space waste of storage shelf A79. Before the user stores the package, if in the checking and organization process, the delivery locker detects that the real-time package information is inconsistent with the package storage information recorded by the delivery locker system, such as the package storage space is wasted as described above, then the package storage information recorded by the delivery locker system may be modified according to the real-time package information, thus avoiding the problem of the storage space waste.

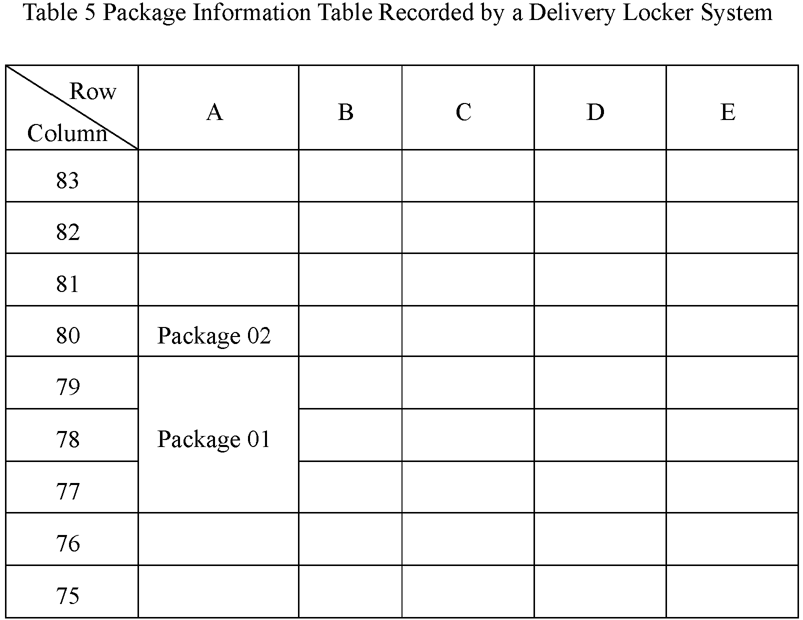

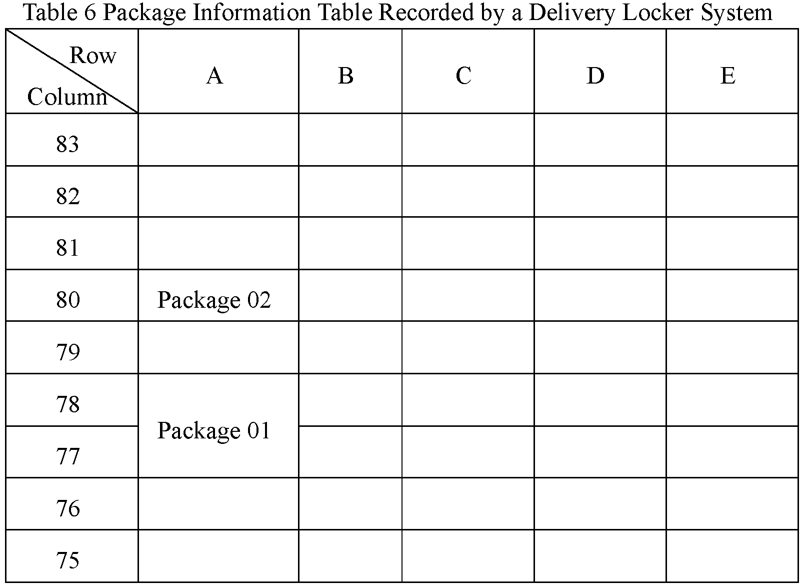

In step S242, an updated storage position of the package is re-calculated according to the real-time package information and a preset algorithm, and the package is re-stored into the updated storage position.

The preset algorithm may be an algorithm for organizing and calculating the storage space by a user which is used in the delivery locker system. The preset algorithm may be designed according to actual requirements. Any algorithm that can be used for organizing the storage space of the delivery locker may be used as the preset algorithm, which is not limited in this embodiment of the present application. The updated storage position may be a new storage space position calculated for each package by the delivery locker system according to the preset algorithm.

In an embodiment of the present application, the delivery locker may further re-calculate updated storage positions of multiple packages by using the preset algorithm according to the scanned real-time package information. If the updated storage position of the package is the same as the storage position before the updating, there is no need to adjust the package. Otherwise, the package is re-stored into the matched updated storage position, so as to organize the remaining vacant storage space of the delivery locker to maximize the use of the storage resources in the delivery locker.

In an embodiment of the present application, the step in which the package is re-stored into the matched updated storage position may include that if a vacant storage position is included in the updated storage position, the vacant storage position is adjusted to a consecutive storage space satisfying a preset storage condition.

The preset storage condition may be a rule that is set according to actual requirements and used for organizing vacant storage positions. For example, the preset storage condition may be arranging all vacant storage positions centrally and occupying as few columns as possible. It may be understood that there may be scattered vacant storage positions in each-type storage space in the delivery locker. To maximize the use of the storage resources in the delivery locker, the stored package may still be organized even if the delivery locker determines, in the checking and organization mode, that the real-time package information is consistent with the package information recorded in the device package storage information. The organization of the vacant storage position can make vacant storage positions centrally and consecutively arranged, so that the remaining vacant storage positions can store a package occupying more storage space, thereby maximizing the use of the storage resources.

In an embodiment of the present application, the preset storage condition may include: when the number of vacant storage positions in the consecutive storage space is not greater than the number of storage positions in each column, the consecutive storage space is arranged into storage space of one column in the delivery locker.

If the number of vacant storage positions in the consecutive storage space is not greater than the number of storage positions in each column, all vacant storage positions may be consecutively arranged into the storage space of the one column in the delivery locker, thereby centralizing available storage resources of the delivery locker.

Table 7 is an information table of storage space layout before the delivery locker organization according to the present application. Table 8 is an information table of storage space layout after the delivery locker organization according to the present application. In a specific example, as shown in Tables 7 and 8, information recorded in Table 7 is the storage space layout information before the delivery locker adjustment, and information recorded in Table 8 is the storage space layout information after the delivery locker adjustment. Before the delivery locker adjustment, as shown in Table 7, all storage space is full, remaining vacant storage shelves A79, A80 and B79. Package 01 is stored on storage shelf A77 and occupies the space height of 2 shelves. Package 02 is stored on storage shelf A81 and occupies the space height of 1 shelf. Package 03 is stored on storage shelf B76 and occupies the space height of 1 shelf. Package 04 is stored on storage shelf B77 and occupies the space height of 2 shelves. Package 05 is stored on storage shelf B80 and occupies the space height of 2 shelves. In this case, if a storage instruction for a package with a height of 3 storage shelves which is input by a user is received, a delivery locker system without adjustment prompts that the storage space is insufficient and the package cannot be stored. However, if the delivery locker performs organization before the package is stored, the storage requirements can be satisfied actually. In the organization of the delivery locker, as shown in Table 8, the remaining storage shelves A79, A80 and B79 may be adjusted into consecutive storage space in one column to satisfy storage conditions of the user. That is, as long as package 04 is stored on shelf A79, all vacant storage positions can be centrally and consecutively arranged into the storage space in the second column of the delivery locker, that is, the available space shown in Table 8. The available space of the adjusted delivery locker may satisfy the package storage requirement of occupying 3 storage shelves from the user, thus maximizing the use of the storage space in the delivery locker. It is to be noted that if the number of vacant storage positions is greater than the number of storage space in each column of the delivery locker, the all vacant storage positions may be centrally arranged into as few columns as possible. For example, if the number of vacant storage positions is 13, and the number of storage space in each column of the delivery locker is 10, then the vacant storage positions may be consecutively arranged into the storage space in two columns of the delivery locker. For example, the first column includes 6 consecutive vacant storage positions, and the third column includes 7 vacant storage positions.

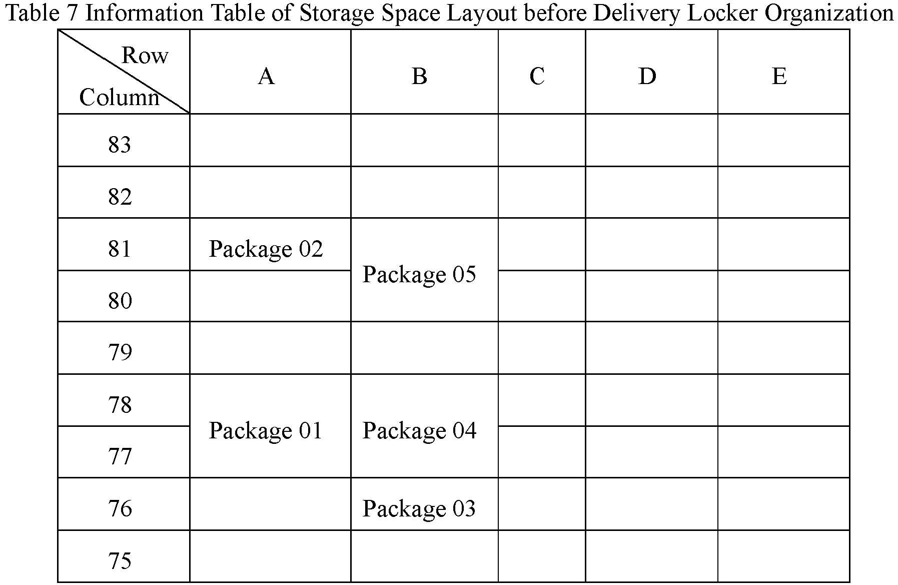

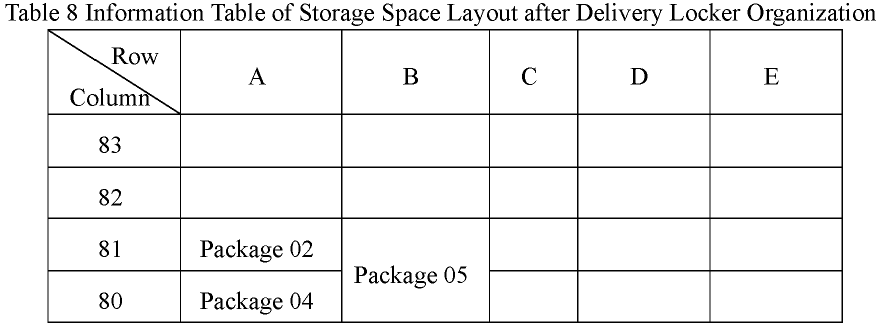

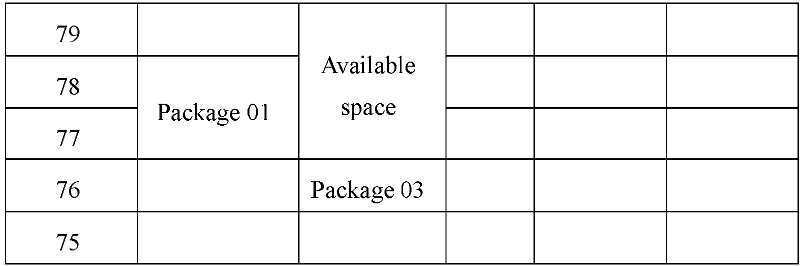

According to the preceding solution, at least one of a storage apparatus or a package in a delivery locker is checked and organized according to device package storage information recorded by the delivery locker. This can improve the phenomena of collecting a wrong package by a user, storage space waste, device faults and the like, thereby preventing the user from collecting a wrong package, maximizing the use of the storage space in the delivery locker, and reducing system faults of the delivery locker.

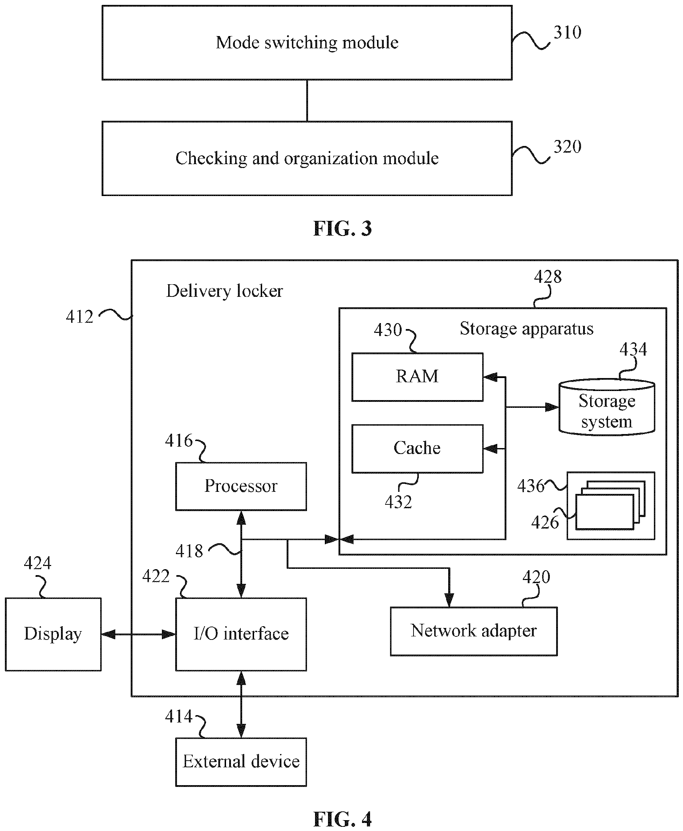

FIG. 3 is a schematic diagram of an organization apparatus for a delivery locker according to the present application. As shown in FIG. 3, the apparatus includes a mode switching module 310 and a checking and organization module 320.

The mode switching module 310 is configured to, when a system time of a delivery locker reaches a preset organization time point, control the delivery locker to enter a checking and organization mode.

The checking and organization module 320 is configured to check and organize, according to device package storage information recorded by the delivery locker, at least one of a storage apparatus or a package in the delivery locker.

According to the application, when the system time of the delivery locker reaches the preset organization time point, the delivery locker is controlled to enter the checking and organization mode; and at least one of the storage apparatus or the package in the delivery locker is checked and organized according to the device package storage information recorded by the delivery locker. This improves the phenomena of collecting a wrong package by a user, storage space waste, device faults and the like, thereby preventing the user from collecting a wrong package, maximizing the use of the storage space in the delivery locker, and reducing system faults of the delivery locker.

The storage apparatus includes a pallet and a checking and organization module 320. The checking and organization module is configured to detect the actual number of pallets in the delivery locker, and perform fault reporting processing when the actual number of pallets is inconsistent with the number of pallets which is recorded in the device package storage information.

The checking and organization module 320 is further configured to: when the actual number of pallets is consistent with the number of pallets which is recorded in the device package storage information, scan the pallet in the delivery locker through a scanning device disposed in the delivery locker, so as to obtain real-time package information, where the real-time package information includes length information, width information and height information of the package; and check the real-time package information with package information recorded in the device package storage information, and organize the package information recorded in the device package storage information according to a checking result. In an embodiment, the checking and organization module 320 is further configured to: perform, according to the real-time package information, data adjustment or fault reporting processing on the package information recorded in the device package storage information, re-calculate an updated storage position of the package according to the real-time package information and a preset algorithm, and re-store the package into the updated storage position.

In an embodiment, the checking and organization 320 is further configured to: if a vacant storage position is included in the updated storage position, adjust the vacant storage position to a consecutive storage space satisfying a preset storage condition.

In an embodiment, the preset storage condition includes: when the number of vacant storage positions in the consecutive storage space is not greater than the number of storage positions in each column, the consecutive storage space is arranged into storage space of one column in the delivery locker.

In an embodiment, the preset organization time point is a target idle time point calculated by the delivery locker according to recorded data.

The preceding apparatus may execute the organization method for a delivery locker provided by any embodiment of the present application, and has functional modules and beneficial effects corresponding to the execution method. For technical details not described in detail in this embodiment, reference may be made to the organization method for a delivery locker provided in any embodiment of the present application.

FIG. 4 is a structural diagram of a delivery locker according to embodiment four of the present application. FIG. 4 shows a block diagram of a delivery locker 412 applicable to implementation modes of the present application. The delivery locker 412 shown in FIG. 4 is merely an example and is not intended to limit the function and use scope of embodiments of the present application.

As shown in FIG. 4, the delivery locker 412 may take the form of a general-purpose computer device. Components of the delivery locker 412 may include, but are not limited to, one or more processors 416, a storage apparatus 428, and a bus 418 connecting different system components (including the storage apparatus 428 and the one or more processors 416).

The bus 418 represents one or more of several types of bus structures, including a memory bus or a memory controller, a peripheral bus, an accelerated graphics port and a processor, or represents a local bus using any one of multiple bus structures. For example, these architectures include, but are not limited to, an industry standard architecture (ISA) bus, a micro channel architecture (MAC) bus, an enhanced ISA bus, a video electronics standards association (VESA) local bus and a peripheral component interconnect (PCI) bus.

The delivery locker 412 typically includes multiple computer system readable media. These media can be any available medium that can be accessed by the delivery locker 412, including volatile and non-volatile media and removable and non-removable media.

The storage apparatus 428 may include a computer system readable medium in the form of a volatile memory, such as at least one of a random access memory (RAM) 430 or a cache memory 432. The delivery locker 412 may include other removable/non-removable and volatile/non-volatile computer system storage media. Merely exemplarily, a storage system 434 may be configured to perform reading and writing on a non-removable and non-volatile magnetic medium (not shown in FIG. 4 and usually referred to as a "hard disk driver"). Although not shown in FIG. 4, it is feasible to provide not only a magnetic disk driver for performing reading and writing on a removable non-volatile magnetic disk (for example, a "floppy disk"), but also an optical disk driver for performing reading and writing on a removable non-volatile optical disk, such as a compact disc read-only memory (CD-ROM), a digital video disc-read only memory (DVD-ROM) or other optical media. In these cases, each driver may be connected to the bus 418 via one or more data media interfaces. The storage apparatus 428 may include at least one program product having a set of program modules (for example, at least one program module). These program modules are configured to perform functions of multiple embodiments of the present application.

A program/utility 436 with a set (at least one) of program modules 426 may be stored, for example, in a storage device 428. Such a program module 426 includes, but is not limited to, an operating system, one or more application programs, other program modules and program data. Each or some combination of these examples may include an implementation of network environment. The program module 426 generally performs functions and/or methods in embodiments of the present application.

The delivery locker 412 may further communicate with one or more external devices 414 (such as a keyboard, a pointing device or a display 424). The delivery locker 412 may further communicate with at least one of the following: one or more devices that enable a user to interact with the delivery locker 412, or any device (such as a network card or a modem) that enables the delivery locker 412 to communicate with one or more other computing devices. These communications may be performed via an input/output (I/O) interface 422. Moreover, the delivery locker 412 may further communicate with one or more networks (for example, a local area network (LAN), a wide area network (WAN) and/or a public network such as the Internet) through a network adapter 420. As shown in FIG. 4, the network adapter 420 communicates with other modules of the delivery locker 412 via the bus 418. It is to be understood that although not shown in FIG. 4, other hardware and/or software modules may be used in conjunction with the delivery locker 412. The other hardware and/or software modules include, but are not limited to, microcode, a terminal driver, a redundant processor, an external disk drive array, a redundant arrays of independent disks (RAID) system, a tape driver and a data backup storage system.

The one or more processors 416 execute a program stored in the storage apparatus 428 to perform various functional applications and data processing, for example, the organization method for a delivery locker provided in the embodiments of the present application.

That is, the processing unit, when executing the program, implements the following steps: when a system time of a delivery locker reaches a preset organization time point, controlling the delivery locker to enter a checking and organization mode; and checking and organizing at least one of a storage apparatus or a package or in the delivery locker according to device package storage information recorded by the delivery locker.

The present application further provides a computer storage medium for storing a computer program. The computer program, when executed by a computer processor, is configured to implement the organization method for a delivery locker of any embodiment in the present application described above: when a system time of a delivery locker reaches a preset organization time point, controlling the delivery locker to enter a checking and organization mode; and checking and organizing at least one of a storage apparatus or a package in the delivery locker according to device package storage information recorded by the delivery locker.

The computer storage medium of the present application may use any combination of one or more computer-readable media. The computer-readable media may include a computer-readable signal medium or a computer-readable storage medium. The computer-readable storage medium may be, and not limited to, an electrical, magnetic, optical, electromagnetic, infrared or semiconductor system, apparatus or device, or any combination thereof. More specific examples of the computer-readable storage medium include (non-exhaustive list): an electrical connection having one or more wires, a portable computer magnetic disk, a hard disk, a random access memory (RAM), a read only memory (ROM), an erasable programmable read only memory (EPROM or flash memory), an optical fiber, a portable compact disk read only memory (CD-ROM), an optical memory device, a magnetic memory device, or any suitable combination thereof. In this document, the computer-readable storage medium may be any tangible medium including or storing a program. The program may be used by an instruction execution system, apparatus or device, or used in conjunction with an instruction execution system, apparatus or device.

The computer-readable signal medium may include a data signal propagated in a baseband or as a part of a carrier. The computer-readable signal medium carries computer-readable program codes. The data signal propagated in this manner may be in multiple forms and includes, and is not limited to, an electromagnetic signal, an optical signal, or any suitable combination thereof. The computer-readable signal medium may further be any computer-readable medium other than the computer-readable storage medium. The computer-readable medium may send, propagate or transmit the program used by the instruction execution system, apparatus or device, or used in conjunction with the instruction execution system, apparatus or device.

The program codes included on the computer-readable medium may be transmitted on any suitable medium including, and not limited to, a wireless medium, a wired medium, an optical cable, radio frequency (RF) and the like, or any suitable combination thereof.

Computer program codes for performing the operations of the present application may be written in one or more programming languages or a combination thereof. The programming languages include object-oriented programming languages such as Java, Smalltalk, C++, and further include conventional procedural programming languages such as a C programming language or similar programming languages. The program codes may be executed entirely on a user computer, partly on a user computer, as a stand-alone software package, partly on a user computer and partly on a remote computer, or entirely on a remote computer or a server. In the case relating to the remote computer, the remote computer may be connected to the user computer via any type of network including a local area network (LAN) or a wide area network (WAN), or may be connected to an external computer (for example, via the Internet through an Internet service provider).

## Claims

1. An automatic organization method for a delivery locker comprising at least one processor (416) and at least one computer system readable medium (430, 432, 434),
the method being executed by the at least one processor (416) and comprising:
in response to determining that a system time of the delivery locker reaches a preset organization time point, controlling (S110) the delivery locker to enter a checking and organization mode; and
checking and organizing (S120) at least one of a storage apparatus or a package in the delivery locker according to device package storage information recorded by the delivery locker;
**characterized in that**,
the storage apparatus comprises a pallet; and
checking and organizing (S120) at least one of the storage apparatus or the package in the delivery locker according to the device package storage information recorded by the delivery locker comprises:
detecting (S220) an actual number of pallets in the delivery locker, and performing fault reporting processing in response to determining that the actual number of pallets is inconsistent with a number of pallets which is recorded in the device package storage information;
wherein checking and organizing the package in the delivery locker according to the device package storage information recorded by the delivery locker further comprises: in response to determining that the actual number of pallets is consistent with the number of pallets which is recorded in the device package storage information,
scanning (S230) the pallet in the delivery locker through a scanning device disposed in the
delivery locker, so as to obtain real-time package information corresponding to the package in the pallet, wherein the real-time package information comprises length information, width information and height information of the package; and
checking the real-time package information with package information recorded in the device package storage information, and organizing (240), according to a checking result, the package information recorded in the device package storage information.

2. The method of claim 1, wherein organizing (240), according to the checking result, the package information recorded in the device package storage information comprises at least one of the following:
performing (S241), according to the real-time package information, data adjustment or fault reporting processing on the package information recorded in the device package storage information; or
re-calculating (S242) an updated storage position of the package according to the real-time package information and a preset algorithm, and re-storing the package into the updated storage position.

3. The method of claim 2, wherein re-storing the package into the updated storage position comprises:
in response to determining that a vacant storage position is comprised in the updated storage position, adjusting the vacant storage position to a consecutive storage space satisfying a preset storage condition.

4. The method of claim 3, wherein the preset storage condition comprises: in a case where a number of vacant storage positions in the consecutive storage space is not greater than a number of storage positions in each column, arranging the consecutive storage space into storage space of one column in the delivery locker.

5. The method of claim 1, wherein the preset organization time point is a target idle time point calculated by the delivery locker according to recorded data.

6. An organization apparatus for a delivery locker comprising at least one processor (416) and at least one computer system readable medium (430, 432, 434),
the organization apparatus being implemented by at least one of software or hardware and to be integrated in said delivery locker and comprising:
a mode switching module (310), which is configured to, in response to determining that a system time of a delivery locker reaches a preset organization time point, controlling the delivery locker to enter a checking and organization mode; and
a checking and organization module (320), which is configured to check and organize, according to device package storage information recorded by the delivery locker, at least one of a storage apparatus or a package in the delivery locker;
**characterized in that**,
the storage apparatus comprises a pallet; and the checking and organization module (320), is configured to detect an actual number of pallets in the delivery locker, and perform fault reporting processing in response to determining that the actual number of pallets is inconsistent with a number of pallets which is recorded in the device package storage information;
wherein the checking and organization module (320) is further configured to, in response to determining that the actual number of pallets is consistent with the number of pallets which is recorded in the device package storage information, scan the pallet in the delivery locker through a scanning device disposed in the delivery locker, so as to obtain real-time package information corresponding to the package in the pallet, wherein the real-time package information comprises length information, width information and height information of the package.

7. The apparatus of claim 6, wherein the checking and organization module (320) is further configured to perform, according to the real-time package information, data adjustment or fault reporting processing on package information recorded in the device package storage information, re-calculate an updated storage position of the package according to the real-time package information and a preset algorithm, and re-store the package into the updated storage position.

8. The apparatus of claim 7, wherein the checking and organization module (320) is further configured to, in response to determining that a vacant storage position is comprised in the updated storage position, adjust the vacant storage position to a consecutive storage space satisfying a preset storage condition.

9. The apparatus of claim 8, wherein the preset storage condition comprises: in a case where a number of vacant storage positions in the consecutive storage space is not greater than a number of storage positions in each column, arranging the consecutive storage space into storage space of one column in the delivery locker.

10. The apparatus of claim 6, wherein the preset organization time point is a target idle time point calculated by the delivery locker according to recorded data.

11. A delivery locker (412), comprising:
at least one processor (416); and
at least one computer system readable medium (430, 432, 434), which is configured to store at least one program (436),
wherein in response to the at least one program (436) being executed by the at least one processor (416), the delivery locker (412) is organized according to the organization method of any one of claims 1 to 5.

## Patentansprüche

1. Automatisches Organisationsverfahren für einen Lieferschrank, der zumindest einen Prozessor (416) und zumindest ein von einem Computersystem lesbares Medium (430, 432, 434) aufweist, wobei das Verfahren von dem mindestens einen Prozessor (416) ausgeführt wird und Folgendes aufweist:
ansprechend darauf, dass bestimmt wird, dass eine Systemzeit des Lieferschranks einen voreingestellten Organisationszeitpunkt erreicht, Steuern (S110) des Lieferschranks, so dass dieser in einen Überprüfungs- und Organisationsmodus eintritt; und
Überprüfen und Organisieren (S120) von einer Lagervorrichtung und/oder einem Paket in dem Lieferschrank gemäß einer Vorrichtungspaketlagerinformation, die von dem Lieferschrank aufgezeichnet wurde;
**dadurch gekennzeichnet, dass**
die Lagervorrichtung eine Palette aufweist; und dass
das Überprüfen und Organisieren (S120) der Lagervorrichtung und/oder des Paketes in dem Lieferschrank gemäß der Vorrichtungspaketlagerinformation, die durch den Lieferschrank aufgezeichnet wurde, Folgendes aufweist:
Detektieren (S220) einer tatsächlichen Anzahl von Paletten in dem Lieferschrank und Ausführen einer Fehlerberichtsverarbeitung ansprechend auf die Bestimmung, dass die tatsächliche Anzahl von Paletten nicht konsistent mit einer Anzahl von Paletten ist, die in der Vorrichtungspaketlagerinformation aufgezeichnet ist;
wobei das Überprüfen und Organisieren des Pakets in dem Lieferschrank gemäß der Vorrichtungspaketlagerinformation, die von dem Lieferschrank aufgezeichnet wurde, weiter Folgendes aufweist:
ansprechend auf eine Bestimmung, dass die tatsächliche Anzahl von Paletten konsistent mit der Anzahl von Paletten ist, die in der Vorrichtungspaketlagerinformation aufgezeichnet ist, Abtasten bzw. Scannen (S230) der Palette in dem Lieferschrank durch eine Scanvorrichtung, die in dem Lieferschrank angeordnet ist, um eine Echtzeit-Paketinformation entsprechend dem Paket in bzw. auf der Palette zu erhalten, wobei die Echtzeit-Paketinformation eine Längeninformation, eine Breiteninformation und eine Höheninformation des Paketes aufweist; und
Überprüfen der Echtzeit-Paketinformation mit Paketinformation, die in der Vorrichtungspaketlagerinformation aufgezeichnet wurde, und Organisieren (240), der Paketinformation, die in der Vorrichtungspaketlagerinformation aufgezeichnet ist, gemäß einem Überprüfungsergebnis.

2. Verfahren nach Anspruch 1, wobei das Organisieren (240), und zwar gemäß dem Überprüfungsergebnis, der Paketinformation, die in der Vorrichtungspaketlagerinformation aufgezeichnet ist, zumindest eines der Folgenden aufweist:
Ausführen (S241), und zwar gemäß der Echtzeit-Paketinformation, einer Datenanpassungs- oder Fehlerberichtsverarbeitung an der Paketinformation, die in der Vorrichtungspaketlagerinformation aufgezeichnet ist; oder
erneutes Berechnen (S242) einer aktualisierten Lagerposition des Paketes gemäß der Echtzeit-Paketinformation und einem voreingestellten Algorithmus und erneutes Lagern des Paketes an der aktualisierten Lagerposition.

3. Verfahren nach Anspruch 2, wobei das erneute Lagern des Paketes an der aktualisierten Lagerposition Folgendes aufweist:
ansprechend auf eine Bestimmung, dass eine freie Lagerposition in der aktualisierten Lagerposition enthalten ist, Anpassen der freien Lagerposition an einen nachfolgenden Lagerplatz, wodurch eine voreingestellte Lagerbedingung erfüllt wird.

4. Verfahren nach Anspruch 3, wobei die voreingestellte Lagerbedingung Folgendes aufweist: in einem Fall, wo eine Anzahl von freien Lagerpositionen in dem aufeinanderfolgenden Lagerraum nicht größer als eine Anzahl von Lagerpositionen in jeder Spalte ist, Anordnen des nachfolgenden Lagerraums in einem Lagerraum von einer Spalte in dem Lieferschrank.

5. Verfahren nach Anspruch 1, wobei der voreingestellte Organisationszeitpunkt ein Ziel- bzw. Soll-Leerlaufzeitpunkt ist, der durch den Lieferschrank gemäß aufgezeichneten Daten berechnet wurde.

6. Organisationsvorrichtung für einen Lieferschrank, der zumindest einen Prozessor (416) und zumindest ein von einem Computersystem lesbares Medium (430, 432, 434) aufweist, wobei die Organisationsvorrichtung durch Software- bzw. Programme und/oder Hardware bzw. Komponenten implementiert ist und in dem Lieferschrank integriert ist, und Folgendes aufweist:
ein Modusschaltmodul (310), das konfiguriert ist, um ansprechend auf eine Bestimmung, dass eine Systemzeit eines Lieferschranks einen voreingestellten Organisationszeitpunkt erreicht hat, den Lieferschrank so zu steuern, dass er in einen Überprüfungs- und Organisationsmodus eintritt; und
ein Überprüfungs- und Organisationsmodul (320), das konfiguriert ist, um gemäß Vorrichtungspaketlagerinformation , die durch den Lieferschrank aufgezeichnet wurde, eine Lagervorrichtung und/oder ein Paket in dem Lieferschrank zu überprüfen und zu organisieren;
**dadurch gekennzeichnet, dass**
die Lagervorrichtung eine Palette aufweist; und
das Überprüfungs- und Organisationsmodul (320) konfiguriert ist, um eine tatsächliche Anzahl von Paletten in dem Lieferschrank zu detektieren und eine Fehlerberichtsverarbeitung ansprechend auf eine Bestimmung auszuführen, dass die tatsächliche Anzahl von Paletten nicht konsistent mit einer Anzahl von Paletten ist, die in der Vorrichtungspaketlagerinformation aufgezeichnet ist;
wobei das Überprüfungs- und Organisationsmodul (320) weiter konfiguriert ist, um ansprechend auf eine Bestimmung, dass die tatsächliche Anzahl von Paletten konsistent mit der Anzahl von Paletten ist, die in der Vorrichtungspaketlagerinformation aufgezeichnet ist, die Palette in dem Lieferschrank durch eine Scan-Vorrichtung, die in dem Lieferschrank angeordnet ist, abzutasten bzw. zu scannen, um eine Echtzeit-Paketinformation entsprechend dem Paket in der Palette zu erhalten;
wobei die Echtzeit-Paketinformation eine Längeninformation, eine Breiteninformation und eine Höheninformation des Paketes aufweist.

7. Vorrichtung nach Anspruch 6, wobei das Überprüfungs- und Organisationsmodul (320) weiter konfiguriert ist, um gemäß der Echtzeit-Paketinformation eine Datenanpassungs- oder Fehlerberichtsverarbeitung an der Paketinformation auszuführen, die in der Vorrichtungspaketlagerinformation aufgezeichnet ist, weiter eine aktualisierte Lagerposition des Paketes gemäß der Echtzeit-Paketinformation und einem voreingestelltem Algorithmus erneut zu berechnen und das Paket erneut in der aktualisierten Lagerposition zu lagern.

8. Vorrichtung nach Anspruch 7, wobei das Überprüfungs- und Organisationsmodul (320) weiter konfiguriert ist, um ansprechend auf eine Bestimmung, dass eine freie Lagerposition in der aktualisierten Lagerposition enthalten ist, die freie Lagerposition auf einen nachfolgenden Lagerraum anzupassen, wodurch eine voreingestellte Lagerbedingung erfüllt wird.

9. Vorrichtung nach Anspruch 8, wobei die voreingestellte Lagerbedingung Folgendes aufweist: in einem Fall, wo eine Anzahl von freien Lagerpositionen in dem nachfolgenden Lagerraum nicht größer als eine Anzahl von Lagerpositionen in jeder Spalte ist, Anordnen des nachfolgenden Lagerraums in einen Lagerraum von einer Spalte in dem Lieferschrank.

10. Vorrichtung nach Anspruch 6, wobei der voreingestellte Organisationszeitpunkt ein Ziel- bzw. Soll-Leerlaufzeitpunkt ist, der durch den Lieferschrank gemäß aufgezeichneten Daten berechnet wurde.

11. Lieferschrank (412), der Folgendes aufweist:
mindestens einen Prozessor (416); und
zumindest ein von einem Computersystem lesbares Medium (430, 432, 434), welches konfiguriert ist, um zumindest ein Programm (436) zu speichern,
wobei ansprechend darauf, dass das mindestens eine Programm (436) durch den mindestens einen Prozessor (416) ausgeführt wird, der Lieferschrank (412) gemäß dem Organisationsverfahren nach einem der Ansprüche 1 bis 5 organisiert wird.

## Revendications

1. Procédé d'organisation automatique d'un casier de livraison, comprenant au moins un processeur (416) et au moins un support lisible par un système informatique (430, 432, 434),
le procédé étant exécuté par l'au moins un processeur (416) et comprenant :
en réponse à la détermination qu'une heure système du casier de livraison atteint un point temporel d'organisation prédéfini, la commande (S110) du casier de livraison pour qu'il entre dans un mode de vérification et d'organisation ; et
la vérification et l'organisation (S120) d'au moins un parmi un appareil de stockage ou un colis dans le casier de livraison en fonction d'informations de stockage du colis du dispositif enregistrées par le casier de livraison ;
**caractérisé en ce que**,
l'appareil de stockage comprend une palette ; et
la vérification et l'organisation (S120) d'au moins un parmi l'appareil de stockage ou le colis dans le casier de livraison en fonction des informations de stockage de colis de dispositifs enregistrées par le casier de livraison comprennent :
la détection (S220) d'un nombre réel de palettes dans le casier de livraison, et l'exécution d'un traitement de rapport d'erreur en réponse à la détermination que le nombre réel de palettes est incompatible avec un nombre de palettes qui est enregistré dans les informations de stockage de colis de dispositifs ;
dans lequel la vérification et l'organisation du colis dans le casier de livraison en fonction des informations de stockage du colis du dispositif enregistrées par le casier de livraison comprennent en outre :
en réponse à la détermination que le nombre réel de palettes est cohérent avec le nombre de palettes qui est enregistré dans les informations de stockage de colis du dispositif,
le scannage (S230) de la palette dans le casier de livraison au moyen d'un dispositif de numérisation disposé dans le casier de livraison, de sorte à obtenir des informations sur le colis en temps réel correspondant au colis dans la palette, dans lequel les informations sur le colis en temps réel comprennent des informations sur la longueur, des informations sur la largeur et des informations sur la hauteur du colis ; et
la vérification des informations du colis en temps réel avec les informations du colis enregistrées dans les informations de stockage du colis du dispositif, et
l'organisation (240), en fonction d'un résultat de vérification, des informations du colis enregistrées dans les informations de stockage du colis du dispositif.

2. Procédé selon la revendication 1, dans lequel l'organisation (240), en fonction du résultat de la vérification, des informations de colis enregistrées dans les informations de stockage de colis du dispositif comprend au moins l'un des éléments suivants :
la mise en œuvre (S241), en fonction des informations du colis en temps réel, d'un traitement d'ajustement des données ou de rapport d'erreur sur les informations du colis enregistrées dans les informations de stockage du colis du dispositif ; ou
le calcul à nouveau (S242) d'une position de stockage mise à jour du colis en fonction des informations du colis en temps réel et d'un algorithme prédéfini, et le stockage à nouveau du colis dans la position de stockage mise à jour.

3. Procédé selon la revendication 2, dans lequel le stockage à nouveau du colis dans la position de stockage mise à jour comprend :
en réponse à la détermination qu'une position de stockage vacante est comprise dans la position de stockage mise à jour, l'ajustement de la position de stockage vacante à un espace de stockage consécutif satisfaisant une condition de stockage prédéfinie.

4. Procédé selon la revendication 3, dans lequel la condition de stockage prédéfinie comprend : dans un cas où un nombre de positions de stockage vacantes dans l'espace de stockage consécutif n'est pas supérieur à un nombre de positions de stockage dans chaque colonne, l'agencement de l'espace de stockage consécutif dans l'espace de stockage d'une colonne dans le casier de livraison.

5. Procédé selon la revendication 1, dans lequel le point temporel d'organisation prédéfini est un point temporel d'inactivité cible calculé par le casier de livraison en fonction des données enregistrées.

6. Appareil d'organisation pour un casier de livraison, comprenant au moins un processeur (416) et au moins un support lisible par un système informatique (430, 432, 434),
l'appareil d'organisation étant mis en œuvre par au moins un parmi un logiciel ou un matériel et destiné à être inclus dans ledit casier de livraison et comprenant :
un module de commutation de mode (310), qui est configuré pour, en réponse à la détermination qu'une heure système d'un casier de livraison atteint un point de temps d'organisation prédéfini, commander le casier de livraison pour entrer dans un mode de vérification et d'organisation ; et
un module de vérification et d'organisation (320), qui est configuré pour vérifier et organiser, en fonction d'informations de stockage de colis de dispositifs enregistrées par le casier de livraison, au moins un parmi un appareil de stockage ou un colis dans le casier de livraison ;
**caractérisé en ce que**,
l'appareil de stockage comprend une palette ; et
le module de vérification et d'organisation (320) est configuré pour détecter un nombre réel de palettes dans le casier de livraison, et effectuer un traitement de rapport d'erreur en réponse à la détermination que le nombre réel de palettes est incompatible avec un nombre de palettes qui est enregistré dans les informations de stockage de colis de dispositifs ;
dans lequel le module de vérification et d'organisation (320) est en outre configuré pour, en réponse à la détermination que le nombre réel de palettes est cohérent avec le nombre de palettes qui est enregistré dans les informations de stockage de colis du dispositif, scanner la palette dans le casier de livraison au moyen d'un dispositif de numérisation disposé dans le casier de livraison, de sorte à obtenir des informations sur le colis en temps réel correspondant au colis dans la palette, dans lequel les informations sur le colis en temps réel comprennent des informations sur la longueur, des informations sur la largeur et des informations sur la hauteur du colis.

7. Appareil selon la revendication 6, dans lequel le module de vérification et d'organisation (320) est en outre configuré pour mettre en œuvre, en fonction des informations du colis en temps réel, un traitement d'ajustement des données ou de rapport d'erreur sur les informations du colis enregistrées dans les informations de stockage du colis du dispositif, pour calculer à nouveau une position de stockage mise à jour du colis en fonction des informations du colis en temps réel et d'un algorithme prédéfini, et pour stocker à nouveau le colis dans la position de stockage mise à jour.

8. Appareil selon la revendication 7, dans lequel le module de vérification et d'organisation (320) est en outre configuré pour, en réponse à la détermination qu'une position de stockage vacante est comprise dans la position de stockage mise à jour, ajuster la position de stockage vacante à un espace de stockage consécutif satisfaisant une condition de stockage prédéfinie.

9. Appareil selon la revendication 8, dans lequel la condition de stockage prédéfinie comprend : dans un cas où un nombre de positions de stockage vacantes dans l'espace de stockage consécutif n'est pas supérieur à un nombre de positions de stockage dans chaque colonne, l'agencement de l'espace de stockage consécutif dans l'espace de stockage d'une colonne dans le casier de livraison.

10. Appareil selon la revendication 6, dans lequel le point temporel d'organisation prédéfini est un point temporel d'inactivité cible calculé par le casier de livraison en fonction des données enregistrées.

11. Casier de livraison (412), comprenant :
au moins un processeur (416) ; et
au moins un support lisible par un système informatique (430, 432, 434), qui est configuré pour stocker au moins un programme (436),
dans lequel, en réponse à l'exécution de l'au moins un programme (436) par l'au moins un processeur (416), le casier de livraison (412) est organisé selon le procédé d'organisation selon l'une quelconque des revendications 1 à 5.
